# EUROPÄISCHE PATENTSCHRIFT

(11) **EP 1 318 012 B1**
(45) Veröffentlichungstag und Bekanntmachung des Hinweises auf die Patenterteilung: **27.07.2005**
(21) Anmeldenummer: 02026456.0
(22) Anmeldetag: 27.11.2002
(51) Int. Cl.: B32B 27/40

(54) **Bewegliche transparente Verbundsysteme, Verfahren zu ihrer Herstellung und ihre Verwendung**
Flexible transpatent composite system, Method for its production and use thereof
Système composite flexible transparent, methode pour sa préparation et son utilisation

(30) Priorität: 10.12.2001 DE 10160571
(43) Veröffentlichungstag der Anmeldung: 11.06.2003
(73) Patentinhaber: Bayer MaterialScience AG, 51368 Leverkusen (DE)
(72) Erfinder: Hoppe, Hans-Georg, 42799 Leichlingen (DE); Winkler, Jürgen, 40764 Langenfeld (DE); Willenberg, Bernd, Dr., 51469 Bergisch Gladbach (DE); Peerlings, Henricus, Dr., 42699 Solingen (DE)

(56) Entgegenhaltungen:
- EP-A- 0 279 346
- DE-A- 19 934 269
- DE-C- 19 510 637

## Beschreibung

Die vorliegende Erfindung betrifft transparente, lichtstabile, bewegliche Verbundsysteme, die aus einer Kombination von starren Teilen aus transparentem, thermoplastischem Kunststoff, vorzugsweise Polycarbonat, mit flexiblen Verbindungselementen aus transparentem, lichtstabilem, thermoplastischem Polyurethan (TPU) bestehen, ein Verfahren zu ihrer Herstellung sowie ihre Verwendung.

Polycarbonate sind wegen ihrer Eigenschaftskombination aus Transparenz, Zähigkeit, Wärmeformbeständigkeit und guten elektrischen Eigenschaften von großer technischer Bedeutung. Eine Übersicht über die Herstellung, Eigenschaften und Anwendungen von Polycarbonaten wird z.B. im Kunststoff Handbuch (G. Becker, D. Braun), Band 3/1 "Polycarbonate, Polyacetale, Polyester, Celluloseester", München, Wien, Carl Hanser Verlag, 1992 oder in "Handbook of Polycarbonate Science and Technology" (D. Legrand, J. Bendler), New York, Basel, Marcel Dekker, 2000 gegeben.

Thermoplastische Polyurethane (TPU) sind wegen ihrer guten Elastomereigenschaften und thermoplastischer Verarbeitbarkeit von großer technischer Bedeutung. Eine Übersicht über die Herstellung, Eigenschaften und Anwendungen von TPU ist z.B. im Kunststoff Handbuch (G. Becker, D. Braun), Band 7 "Polyurethane", München, Wien, Carl Hanser Verlag, 1983 oder in Handbook of Polyurethanes (M. Szycher), CRC Press LLC, Boca Raton, FL, U.S.A. 1999 gegeben.

Verbundsysteme aus Polycarbonat und thermoplastischen Polyurethanen als Laminate sind bekannt und im Stand der Technik beschrieben. Sie werden insbesondere als Sicherheits-Verbundsysteme eingesetzt, z.B. in Verbindung mit Glas (Sicherheitsverbundglas). Diese Anwendung wird z.B. ausführlich in EP-A 85006 beschrieben.

In "Neue Konstruktionsmöglichkeiten mit Kunststoffen" von J. Kunz, W. Land, J. Wierer, Band 5, Augsburg 1991 oder "Kunststoff-Taschenbuch" von 1992 werden Filmscharniere beschrieben. Solche Filmscharniere sind bewegliche, unlösbare, stoffschlüssige Verbindungen, die durch Erzeugen einer extremen Querschnittsverjüngung an Spritzgießteilen hergestellt werden. Solche Filmscharniere bestehen aus dem gleichen Material wie die starren Teile, die das Filmscharnier miteinander verbindet. Die Flexibilität entsteht ausschließlich durch eine extreme Verschnittsreduktion. Für diese Filmscharniere werden teilkristalline Polymere eingesetzt, vorzugsweise Polyolefine, die häufig nicht vollständig transparent sind.

Aufgabe der vorliegenden Erfindung war es, transparente, lichtstabile, bewegliche, thermoplastische Verbundsysteme aus transparentem Kunststoff zur Verfügung zu stellen.

Diese Aufgabe konnte dadurch gelöst werden, dass man die Kunststoffteile mit einem thermoplastischen Polyurethan verbindet.

Gegenstand der vorliegenden Erfindung sind daher bewegliche, transparente, lichtstabile Verbundsysteme bestehend aus mindestens zwei starren Teilen (1) aus transparentem lichtstabliem thermoplastischem Polycarbonat, die jeweils über eine Kante mittels eines flexiblen Verbindungselementes (2) aus einem thermoplastischen, transparenten, lichtstabilen Polyurethan (TPU) mit einer Trübung von 0 bis 20 % bei einer Dicke von 1 mm (nach ISO 14782/ASTM D 1003-97), einer Shore-Härte von 60 Shore A bis 70 Shore D (gemäß ISO 868/DIN 53 505) und einem Yellowness Index von 0 bis 25 bei einer Dicke von 1 mm (gemäß DIN 6167/ASTM E 313-00) miteinander verbunden sind, wobei das Verbindungselement eine reversible, um bis zu 180° verformbare Knickstelle bildet.

Das eingesetzte TPU sollte folgende Eigenschaften besitzen: transparent, lichtstabil und flexibel. Thermoplastische Polyurethane, die diese Eigenschaften besitzen, werden z.B. in EP-A 1 090 940 beschrieben und sind besonders bevorzugt.

Bevorzugt bestehen die Teile (1) aus transparentem Polycarbonat.

Die Kunststoffteile (1) können massive Platten oder sonstige flächige Gebilde, wie z.B. Hohlkammerplatten sein, aber auch dreidimensionale, transparente Formteile, die durch flexible Verbindungselemente aus transparentem, thermoplastischem Polyurethan miteinander verbunden sind und dadurch ein insgesamt bewegliches, flexibles, transparentes Verbundsystem ergeben.

Die Teile (1) weisen bevorzugt eine Dicke von 50 µm bis 2 mm auf

Das Verbindungselement (2) besteht vorzugsweise aus einem aliphatischen thermoplastischen Polyurethan.

Das Verbindungselement (2) weist vorzugsweise eine Dicke von 100 µm bis 2 mm auf.

Bevorzugt befindet sich das Verbindungselement (2) über einem Teil oder über der vollständigen Fläche der Teile (1).

Die erfindungsgemäßen, transparenten, beweglichen Verbundsysteme bestehen vorzugsweise aus mindestens zwei transparenten Polycarbonatplatten, die durch das flexible Verbindungselement aus transparentem, thermoplastischem Polyurethan miteinander verbunden sind. Dabei kann das Verbindungselement entweder teilweise oder vollflächig auf den Polycarbonatplatten aufgebracht sein. Das Verbindungselement kann entweder einseitig oder beidseitig auf den Polycarbonatplatten aufgebracht sein.

Unter Polycarbonatplatten sind dabei nicht nur massive Platten, sondern auch Hohlkammerplatten zu verstehen. Ebenso können die Platten nicht nur eben, sondern auch dreidimensional ausgebildet sein, wie z.B. Wellplatten aus Polycarbonat.

Die erfindungsgemäßen Verbundsysteme sind vorzugsweise transparente, bewegliche Zweikomponentenverbunde, bei denen sowohl die Teile aus Kunststoff als auch das flexible Verbindungselement (2) aus thermoplastischem, aliphatischem Polyurethan transparent sind. Vorzugsweise bestehen die Teile (1) aus Polycarbonat.

Ein besonderer Vorteil solcher flexibler Verbindungselemente (Scharniere) aus thermoplastischem Polyurethan ist ihre Transparenz und die sehr hohe mechanische Belastbarkeit, insbesondere die Wechselbiegefestigkeit im Vergleich zu anderen Scharnieren, z.B. Filmscharnieren.

Während die bekannten Filmscharniere nur eine Beweglichkeit um eine Drehachse gewährleisten, ist bei dem erfindungsgemäßen Verbundsystem eine Beweglichkeit um alle Raumachsen möglich.

Das Verbindungselement (2) kann durch Verwendung eines Klebers mit den Kunststoffteilen (1) verbunden werden. Der Klebstoff kann an der Oberfläche des Verbindungselementes und/oder an der Oberfläche der Kunststoffteile aufgebracht werden.

Das Verbindungselement (2) kann auch durch Laminierung mit den Kunststoffteilen (1) verbunden werden. Dabei wird durch kontinuierliches oder diskontinuierliches Verpressen unter Einwirkung von erhöhter Temperatur und/oder Druck ein Verbund zwischen den Kunststoffteilen und dem Verbindungselement hergestellt. Zur Erzielung einer guten Haftung des Elementes (2) auf dem Kunststoffteil sollte das Kunststoffteil während des Herstellungsprozesses auf einer Temperatur oberhalb von 50°C gehalten werden. Auch spezielle Laminier-Verfahrenstechniken, wie z.B. Hochfrequenz-(HF)-Verschweißung können dabei bevorzugt eingesetzt werden. Diese Technik beruht auf einem durch Anlegen eines Hochfrequenzfeldes verursachten, lokalen Aufschmelzen des Polymers, wobei nach Verfestigung des Materials eine Haftung entsteht. HF-Verschweißung wird z.B. im Kunststoff-Taschenbuch (H. Sächtling), 24. Ausgabe, Hanser-Verlag, 1989, Seiten 196-197 beschrieben.

Die erfindungsgemäßen, flexiblen Verbundsysteme lassen sich aber auch durch Zweikomponentenspritzguss herstellen. Dazu wird ein mindestens zweiteiliges Formteil aus thermoplastischem Kunststoff gespritzt, das durch ein im gleichen Werkzeug hergestelltes Element aus thermoplastischem Polyurethan verbunden wird. Der Zweikomponentenspritzguss wird beispielsweise in G. Ehrenstein, K. Kuhmann, Mehrkomponentenspritzgießen - Technologie, Prozess und Verbundeigenschaften- Düsseldorf 1997 beschrieben.

Ebenfalls können die erfindungsgemäßen Verbundsysteme über Co-Extrusion oder über Extrusionsbeschichtung hergestellt werden. Bei der Co-Extrusion werden sowohl der thermoplastische Kunststoff als auch das TPU in flüssiger Form entweder im Extruderkopf oder kurz dahinter zusammengeführt. Bei Extrusionsbeschichtung wird das schmelzflüssige TPU entweder gesamt oder teilweise über die Breite der Kunststoffteile aufgebracht.

Die erfindungsgemäßen Verbundsysteme werden bevorzugt als Bau- und Konstruktionselemente eingesetzt, wie z.B. faltbare Dächer, faltbare Jalousien. Der Vorteil derartiger flexibler Verbundsysteme ist, dass sie im gefalteten Zustand sehr kompakt sind, kaum Platz einnehmen und daher auch gut zu transportieren sind. Außerdem sind sie ohne Aufwand wieder entfaltbar.

Die erfindungsgemäßen Verbundsysteme können z.B. auch als bewegliche, ausrichtbare Träger für photovoltaische Sonnenkollektoren verwendet werden. Der Faltvorgang bei den Verbundsystemen ist reversibel.

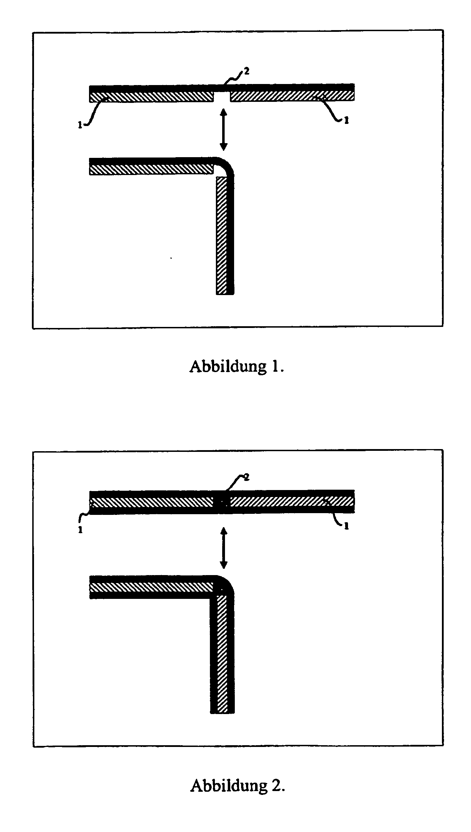

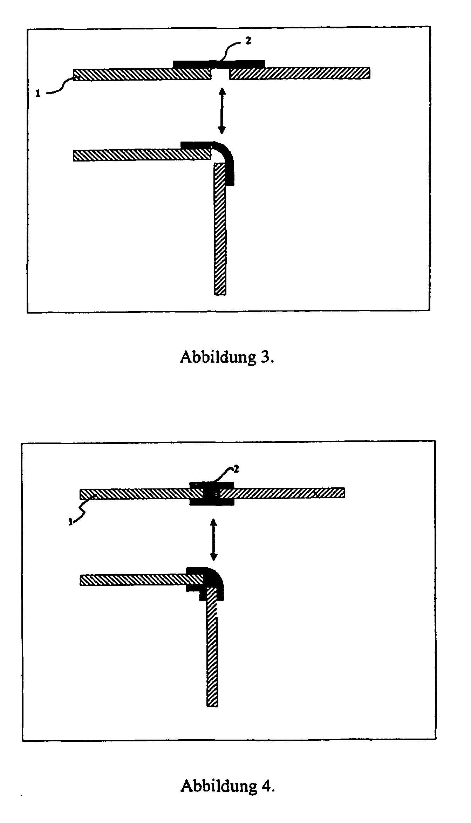

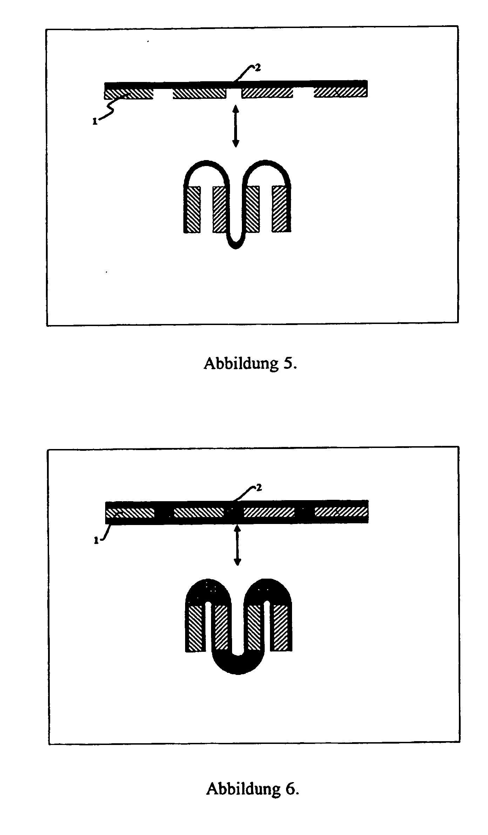

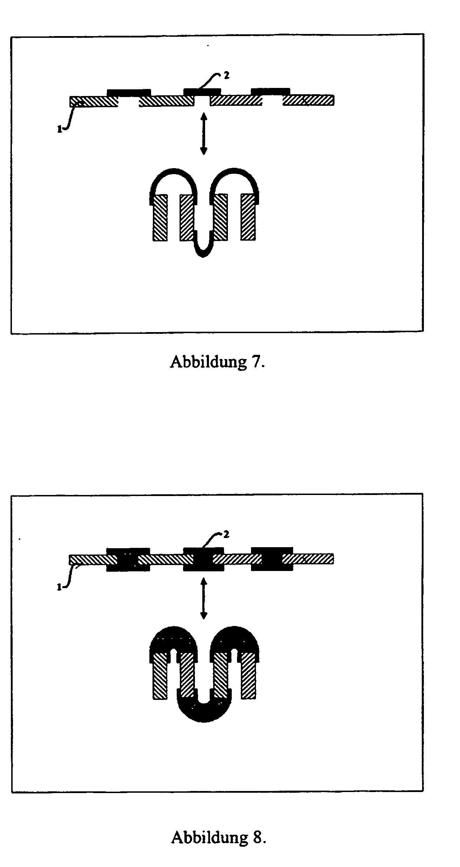

Die Erfindung soll anhand der Abbildungen näher erläutert werden. Jede der Abbildungen 1 bis 8 zeigt den Querschnitt durch ein Verbundsystem im ungefalteten und im gefalteten Zustand. (1) ist eine Kunststoffplatte und (2) ist das TPU-Verbindungselement.

## Patentansprüche

1. Lichtstabiles, transparentes Verbundsystem bestehend aus mindestens zwei starren Teilen (1) aus transparentem, lichtstabilem thermoplastischem Polycarbonat, die jeweils über eine Kante mittels eines flexiblen Verbindungselementes (2) aus einem thermoplastischen, transparenten, lichtstabilen aliphatischen Polyurethan (TPU) mit einer Trübung von 0 bis 20 % bei einer Dicke von 1 mm (nach ISO 14782/ASTM D 1003-97), einer Shore-Härte von 60 Shore A bis 70 Shore D (gemäß ISO 868/DIN 53-505) und einem Yellowness Index von 0 bis 25 bei einer Dicke von 1 mm (gemäß DIN 6167/ASTM E 313-00) miteinander verbunden sind, wobei das Verbindungselement eine reversible, um bis zu 180° verformbare Knickstelle bildet.

2. Verbundsystem nach Anspruch 1, **dadurch gekennzeichnet, dass** es sich bei den Teilen (1) um Flächengebilde handelt.

3. Verbundsystem gemäß Anspruch 2, **dadurch gekennzeichnet, dass** die Teile (1) eine Dicke von 50 µm bis 2 mm aufweisen.

4. Verbundsystem nach Anspruch 1, **dadurch gekennzeichnet, dass** es sich bei den Teilen (1) um massive Platten handelt.

5. Verbundsystem nach Anspruch 1, **dadurch gekennzeichnet, dass** es sich bei den Teilen (1) um Hohlkammerplatten handelt.

6. Verbundsystem nach Anspruch 1, **dadurch gekennzeichnet, dass** es sich bei den Teilen (1) um dreidimensionale Teile handelt.

7. Verbundsystem gemäß Anspruch 1, **dadurch gekennzeichnet, dass** das Verbindungselement (2) eine Dicke von 100 µm bis 2 mm aufweist.

8. Verbundsystem gemäß Anspruch 1, **dadurch gekennzeichnet, dass** sich das Verbindungselement (2) über einem Teil oder über der vollständigen Fläche der Teile (1) befindet.

9. Verfahren zur Herstellung der Verbundsysteme gemäß der Ansprüche 1 bis 8, **dadurch gekennzeichnet, dass** die Teile (1) mit dem Verbindungselement (2) verbunden werden.

10. Verfahren gemäß Anspruch 10, **dadurch gekennzeichnet, dass** die Teile (1) mit dem Verbindungselement (2) verklebt werden.

11. Verfahren gemäß Anspruch 10, **dadurch gekennzeichnet, dass** das Verbindungselement (2) durch Zweikomponentenspritzguss auf die Teile (1) aufgebracht wird.

12. Verfahren gemäß Anspruch 10, **dadurch gekennzeichnet, dass** das Verbindungselement (2) durch kontinuierliche oder diskontinuierliche Laminierung auf die Teile (1) aufgebracht wird.

13. Verfahren gemäß Anspruch 10, **dadurch gekennzeichnet, dass** das Verbindungselement (2) durch Co-Extrusion auf die Teile (1) aufgebracht wird.

14. Verfahren gemäß Anspruch 10, **dadurch gekennzeichnet, dass** das Verbindungselement (2) durch Extrusionsbeschichtung auf die Teile (1) aufgebracht wird.

15. Verwendung der Verbundsysteme gemäß der Ansprüche 1 bis 8 als Konstruktions-oder Bauelemente und als ausrichtbare, bewegliche Träger für photovoltaische Sonnenkollektoren.

## Claims

1. Light-stable, transparent composite system consisting of at least two rigid parts (1) made of a transparent, light-stable thermoplastic polycarbonate which are joined together at an edge by a flexible connecting member (2) made of a thermoplastic, transparent, light-stable, aliphatic polyurethane (TPU) having a haze of 0 to 20 % at a thickness of 1 mm (to ISO 14782/ASTM D 1003-97), a Shore hardness of 60 Shore A to 70 Shore D (to ISO 868/DIN 53-505) and a yellowness index of 0 to 25 at a thickness of 1 mm (to DIN 6167/ASTM E 313-00), wherein the connecting member forms a reversible fold that may be deformed by up to 180°.

2. Composite system according to claim 1, **characterised in that** the parts (1) are planar structures.

3. Composite system according to claim 2, **characterised in that** the parts (1) have a thickness of 50 µm to 2 mm.

4. Composite system according to claim 1, **characterised in that** the parts (1) are solid sheets.

5. Composite system according to claim 1, **characterised in that** the parts (1) are twin-wall sheets.

6. Composite system according to claim 1, **characterised in that** the parts (1) are three-dimensional.

7. Composite system according to claim 1, **characterised in that** the connecting member (2) has a thickness of 100 µm to 2 mm.

8. Composite system according to claim 1, **characterised in that** the connecting member (2) is located over a fraction of the surface or the whole surface of the parts (1).

9. Method for producing the composite systems according to claims 1 to 8, **characterised in that** the parts (1) are connected to the connecting member (2).

10. Method according to claim 10, **characterised in that** the parts (1) are stuck to the connecting member (2).

11. Method according to claim 10, **characterised in that** the connecting member (2) is applied to the parts (1) by two-component injection moulding.

12. Method according to claim 10, **characterised in that** the connecting member (2) is applied to the parts (1) by continuous or discontinuous lamination.

13. Method according to claim 10, **characterised in that** the connecting member (2) is applied to the parts (1) by coextrusion.

14. Method according to claim 10, **characterised in that** the connecting member (2) is applied to the parts (1) by extrusion coating.

15. Use of the composite systems according to claims 1 to 8 as construction or building components and as alignable, movable supports for photovoltaic solar energy collectors.

## Revendications

1. Système composite transparent, stable à la lumière, consistant en au moins deux pièces rigides (1) en un polycarbonate thermoplastique transparent, stable à la lumière, qui sont reliées l'une à l'autre par un bord, à l'aide d'un élément flexible de liaison (2) en un polyuréthanne thermoplastique (TPU) aliphatique, transparent, stable à la lumière, avec un trouble de 0 à 20% pour une épaisseur de 1 mm (selon ISO 14782/ASTM D 1003-97), une dureté Shore de 60 Shore A à 70 Shore D (selon ISO 868/DIN 53-505) et un indice de jaunissement de 0 à 25 pour une épaisseur de 1 mm (selon DIN 6167/ASTM E 313-00), où l'élément de liaison forme un point de courbure réversible, déformable jusqu'à 180°.

2. Système composite selon la revendication 1, **caractérisé en ce que** les pièces (1) consistent en des produits surfaciques.

3. Système composite selon la revendication 2, **caractérisé en ce que** les pièces (1) présentent une épaisseur de 50 µm à 2 mm.

4. Système composite selon la revendication 1, **caractérisé en ce que** les pièces (1) consistent en des plaques massives.

5. Système composite selon la revendication 1, **caractérisé en ce que** les pièces (1) consistent en des plaques creuses.

6. Système composite selon la revendication 1, **caractérisé en ce que** les pièces (1) consistent en des pièces tridimensionnelles.

7. Système composite selon la revendication 1, **caractérisé en ce que** l'élément de liaison (2) présente une épaisseur de 100 µm à 2 mm.

8. Système composite selon la revendication 1, **caractérisé en ce que** l'élément de liaison (2) se trouve sur une partie ou toute la surface de la pièce (1).

9. Procédé de préparation du système composite selon les revendications 1 à 8, **caractérisé en ce que** les pièces (1) sont reliées par l'élément de liaison (2).

10. Procédé selon la revendication 9, **caractérisé en ce que** les pièces (10) sont collées à l'élément de liaison (2).

11. Procédé selon la revendication 10, **caractérisé en ce que** l'élément de liaison (2) est appliqué sur les pièces (1) par moulage par injection à deux composants.

12. Procédé selon la revendication 10, **caractérisé en ce que** l'élément de liaison (2) est appliqué sur les pièces (1) par stratification continue ou discontinue.

13. Procédé selon la revendication 10, **caractérisé en ce que** l'élément de liaison (2) est appliqué sur les pièces (1) par coextrusion.

14. Procédé selon la revendication 10, **caractérisé en ce que** l'élément de liaison (2) est appliqué sur les pièces (1) par revêtement par extrusion.

15. Utilisation du système composite selon les revendications 1 à 8, comme élément de construction et comme support mobile, orientable de collecteurs solaires photovoltaïques.
